# EUROPEAN PATENT APPLICATION

(11) **EP 4 715 339 A1**
(43) Date of publication of application: **25.03.2026**
(21) Application number: 24202328.1
(22) Date of filing: 24.09.2024
(51) Int. Cl.: G01D 21/00, G08C 17/00

(54) **MEASUREMENT ASSEMBLY FOR DETERMINING A CHARACTERISTIC OF A ROTATING PART OF A ROTATING SYSTEM FOR A VEHICLE, ROTATING SYSTEM FOR A VEHICLE, VEHICLE AND METHOD FOR OPERATING A ROTATING SYSTEM FOR A VEHICLE**

(71) Applicant: Volvo Car Corporation, 405 31 Göteborg (SE)
(72) Inventor: LÖFGREN, Robert, 40531 Göteborg (SE); HAGBERG, Jan-Erik, 40531 Göteborg (SE); HOLMBERG, Kristian, 40531 Göteborg (SE); BERNLER, Max, 40531 Göteborg (SE); WESTHED, Richard, 40531 Göteborg (SE); SUNDBERG, Krister, 40531 Göteborg (SE)
(74) Representative: Maiwald GmbH

(57) **Abstract**

A measurement assembly (24) for determining a characteristic of a rotating part (18) of a rotating system (10) for a vehicle is described. The measurement assembly (24) comprises a first unit (26) mountable on a rotating part (18) of the rotating system (10). The first unit (26) comprises an analog-digital converter, a first communication interface, and a first power transmission interface, wherein the analog-digital converter and the first communication interface are communicatively coupled, and wherein the analog-digital converter and the first power transmission interface are electrically coupled. Moreover, at least one sensor (40) is electrically coupled to the analog-digital converter. The measurement system (24) further comprises a second unit (42) mountable on a static part (12) of the rotating system (10). The second unit (42) comprises a second communication interface, and a second power transmission interface. The first communication interface and the second communication interface are wirelessly coupled. Moreover, the first power transmission interface and the second power transmission interface are wirelessly coupled. Additionally, a rotating system (10) for a vehicle, a vehicle, and a method for operating a rotating system (10) are presented.

## Description

### TECHNICAL FIELD

The present disclosure relates to measurement assembly for determining a characteristic of a rotating part of a rotating system for a vehicle.

Moreover, the present disclosure is directed to a rotating system for a vehicle and a vehicle.

Furthermore, the present disclosure relates to a method for operating a rotating system for a vehicle.

### BACKGROUND ART

In many rotating systems of vehicles, e.g. passenger cars, trucks, buses or motorcycles, one or more characteristics of a rotating part of the rotating system are relevant for the operation of the rotating system. This also applies to research and development activities involving rotating systems of vehicles. Also in the context of such activities, one or more characteristics of a rotating part of the rotating system may be a relevant input for improving and/or modifying the rotating system. In the context of the present disclosure, any system that comprises at least one rotating part and at least one static part, wherein the rotating part is rotatable with respect to the static part, is considered to be a rotating system. In such systems, the fact that the rotating part is rotatable, and in relevant operational situations effectively rotating, is challenging when it comes to the transfer of measurement data between the rotating part and the static part and when it comes to powering of components of the measurement assembly located on the rotating part.

### SUMMARY

Consequently, it is an objective of the present disclosure to further improve measurement assemblies for determining a characteristic of a rotating part of a rotating system for a vehicle. Particularly, data transfer and power transfer involving a component of the measurement assembly located on the rotating part shall be enhanced.

The problem is at least partially solved or alleviated by the subject matter of the independent claims of the present disclosure, wherein further examples are incorporated in the dependent claims.

According to a first aspect, there is provided a measurement assembly for determining a characteristic of a rotating part of a rotating system for a vehicle. The measurement assembly comprises a first unit mountable on a rotating part of the rotating system. The first unit comprises an analog-digital converter, a first communication interface, and a first power transmission interface. The analog-digital converter and the first communication interface are communicatively coupled. Moreover, the analog-digital converter and the first power transmission interface are electrically coupled. The measurement assembly further comprises at least one sensor electrically coupled to the analog-digital converter. Additionally, the measurement assembly comprises a second unit mountable on a static part of the rotating system. The second unit comprises a second communication interface, and a second power transmission interface. The first communication interface and the second communication interface are wirelessly coupled. Moreover, the first power transmission interface and the second power transmission interface are wirelessly coupled. Such a measurement assembly is structurally simple. Furthermore, due to the fact that the first unit is mountable on the rotating part of the rotating system and the second unit is mountable on the static part of the rotating system, the first unit and the second unit may be reliably coupled. This applies to the communication of measurement data between the first unit and the second unit. To this end, the first communication interface and the second communication interface are used, which are wirelessly coupled. Furthermore, this applies to the transmission of power from the second unit to the first unit. To this end, the first power transmission interface and the second power transmission interface are used, which are wirelessly coupled. In other words, the first unit may be reliably powered. This allows to reliably operate both the at least one sensor and the analog-digital converter. The fact that the analog-digital converter is provided on the first unit has the effect that the data, more precisely measurement data, communicated between the first unit and the second unit, is digital. Consequently, high quality of data transmission can be ensured. In other words, the digital data communicated between the first unit and the second unit, is less prone to errors and disturbances than analog data would be. Altogether, the measurement assembly is simple and allows for a reliable and precise determination of a characteristic of the rotating part.

According to an example, the second unit additionally comprises a wire-bound communication interface. The wire-bound communication interface is communicatively coupled to the second communication interface. Consequently, using the wire-bound communication interface, data, originating from the first unit and describing a characteristic of the rotating part, may be transferred to a data processing device which is separate from the measurement assembly, but communicatively connected to the measurement assembly by the wire-bound communication interface. Consequently, measurement data originating from the first unit, may be further treated and analyzed. According to an example, the wire-bound communication interface is a bus interface such as a CAN bus interface. Alternatively, the wire-bound communication interface may be an ethernet interface. Thus, the measurement data may be reliably transmitted the data processing device.

According to an example, the first communication interface comprises a first wireless communication means, and a second wireless communication means. Additionally, the second communication interface comprises a first wireless communication means, and a second wireless communication means. The first wireless communication means of the first communication interface is communicatively coupled or couplable to the first wireless communication means of the second communication interface. The second wireless communication means of the first communication interface is communicatively coupled or couplable to the second wireless communication means of the second communication interface. The first wireless communication means, and the second wireless communication means are different. In other words, each of the first communication interface and the second communication interface comprises two different wireless communication means. Since different wireless communication means offer different combinations of advantages and disadvantages, such as different performances under different circumstances, having two different wireless communication means offers a choice to select one out of the two different wireless communication means based on a current situation and/or based on current circumstances. Consequently, depending on the situation and/or on the circumstances, the most appropriate communication means can be selected. Thus, when considering the measurement assembly as a whole, reliable and efficient communication can be ensured for a great variety of situations and circumstances. Altogether, the communication of measurement data between the first unit and the second unit is particularly reliable.

According to an example, one of the first wireless communication means and the second wireless communication means comprises a WiFi antenna. Consequently, WiFi communication may be established between the first unit and the second unit. Alternatively, one of the first wireless communication means and the second wireless communication means comprises a Bluetooth antenna. Consequently, Bluetooth communication may be established between the first unit and the second unit. According to a further alternative, one of the first wireless communication means and the second wireless communication means comprises a Zigbee antenna. Consequently, Zigbee communication may be established between the first unit and the second unit. According to still another example, one of the first wireless communication means and the second wireless communication means comprises a Z wave antenna. Consequently, Z wave communication may be established between the first unit and the second unit. According to a further example, one of the first wireless communication means and the second wireless communication means comprises an infrared transmitter. Consequently, infrared communication may be established between the first unit and the second unit. According to a further example, one of the first wireless communication means and the second wireless communication means comprises a light source configured to emit visible light and the respective other one comprises a light detector configured to detect visible light. Consequently, optical communication may be established between the first unit and the second unit. It is noted that any of these wireless communication technologies may be used in the first communication means of the first communication interface and in the first communication means of the second communication interface. In the same manner, any of the above-mentioned wireless communication technologies may be used in the second communication means of the first communication interface and in the second communication means of the second communication interface. Thus, the communication means may be adapted to a particular application such that for a great variety of applications, reliable data transmission can be ensured.

According to an example, the first wireless communication means comprise a WiFi antenna, respectively, and the second communication means comprise an infrared transmitter, respectively. Thus, the first wireless communication means of the first communication interface is communicatively coupled or couplable to the first wireless communication means of the second communication interface via WiFi, and the second wireless communication means of the first communication interface is communicatively coupled or couplable to the second wireless communication means of the second communication interface via infrared communication.

In an example, the first communication interface and the first power transmission interface are formed integrally. Additionally or alternatively, the second communication interface and the second power transmission interface are formed integrally. This means that the first communication interface is the first power transmission interface or vice versa. In the same manner, this means that the second communication interface is the second power transmission interface or vice versa. This means that the same element or group of elements is used for transmitting data and for transmitting power. This reduces a number of parts needed for the measurement assembly. Thus, the measurement assembly is compact and structurally simple. In an example, the first power transmission interface may comprise an induction coil. The same coil may be used as an antenna configured to transfer data, i.e. as a communication interface. In the same manner, the second power transmission interface may comprise an induction coil. The same coil may be used as an antenna configured to transfer data, i.e. as a communication interface. In these cases, the data to be communicated may be modulated onto the signals used for power transfer.

According to an example, the measurement assembly comprises at least two sensors connected to the same analog-digital converter or to different analog-digital converters. Thus, the analog-digital converter may comprise two or more channels, wherein one sensor may be connected to each of the two or more channels. Alternatively, the first unit may comprise two or more analog-digital converters and at least one sensor may be connected to each of the two or more analog-digital converters. It is also possible to combine these examples. In such a combined example, two or more analog-digital converters would be provided on the first unit, wherein two or more sensors are connected to each of the two or more analog-digital converters. In any case, having two or more sensors allows to determine two or more characteristics of the rotating part and/or to determine a characteristic at different locations of the rotating part. Consequently, valuable insights on a state and/or a behavior of the rotating part may be provided in a precise and reliable manner.

In an example, the first unit comprises a ring-shaped or curved carrier element. Additionally or alternatively, the second unit comprises a ring-shaped or curved carrier element. In this context, the carrier element of the first unit is configured to carry the components of the first unit. Optionally, the carrier element of the first unit is additionally configured to connect the components of the first unit to the rotating part. Similarly, the carrier element of the second unit is configured to carry the components of the second unit. Optionally, the carrier element of the second unit is additionally configured to connect the components of the second unit to the static part. Both the carrier element of the first unit and the carrier element of the second unit may comprise a printed circuit board. Moreover, a ring shape or a curved shape of the carrier element of the first unit and the carrier element of the second unit facilitates mounting and integration of the carrier element of the first unit on the rotating part and of the carrier element of the second unit on the static part. It is noted that the ring-shape or curved shape designates the general appearance of the carrier element and is not limited to specific outer or inner contours. In an example, the outer contour and/or the inner contour of the carrier elements is circular or arc-shaped. In another example, the outer contour and/or the inner contour of the carrier element is polygonal, e.g. hexagonal or octagonal. For both the carrier element of the first unit and the carrier element of the second unit, the carrier elements need to be sized in a compact manner. Furthermore, as far as the carrier element of the first unit is concerned, the carrier element needs to be designed in a way that it does not create extensive air drag or noise. This may be achieved by having a ring-shaped or curved carrier element. For the ease of communication and power transfer, it is advantageous if the carrier element of the second unit is shaped similarly to the carrier element of the first unit.

In an example in which the carrier element of the first unit and the carrier element of the second unit are ring-shaped, the first unit and the second unit are particularly suitable for being mounted on a rotating part and a static part, respectively, such that the first unit and the second unit face one another along an axis of rotation. In an example, in which the carrier element of the first unit and the carrier element of the second unit are curved, the first unit and the second unit are particularly suitable for being mounted on a rotating part and a static part, respectively, such that the first unit and the second unit face one another in a radial direction, wherein the radial direction is determined with reference to an axis of rotation of the rotating part.

In an example, the carrier element of the first unit and/or the carrier element of the second unit comprises a ferromagnetic material. The ferromagnetic material may enhance the power transfer and/or the communication between the first unit and the second unit.

According to an example, the first power transmission interface and the second power transmission interface are inductively coupled. This allows to efficiently and reliably provide power for the components of the first unit, in particular the analog-digital converter. In this context, the first power transmission interface and the second power transmission interface may be configured to communicate such that the first power transmission interface may communicate a need or request of power to the second power transmission interface. Based thereon, the second power transmission interface may provide the necessary power, e.g. by adjusting a frequency of power transmission.

In an example, the at least one sensor comprises one or more of a temperature sensor, a strain sensor, an electric resistance sensor and a voltage sensor. Temperature, strain, electric resistance and voltage are relevant parameters for rotating systems of vehicles. Having measurement data indicative of a temperature, a strain, electric resistance and/or a voltage, thus, allows to enhance operation of the rotating system. It is noted that a strain measurement may be indicative of a torque. Moreover, such measurement data is valuable when developing and/or enhancing rotating systems for vehicles.

In an example in which the at least one sensor comprises a temperature sensor, the temperature sensor may comprise a thermocouple and/or a resistance temperature detector. Consequently, accurate measurement data indicative of a temperature may be provided.

According to a second aspect, there is provided a rotating system for a vehicle. The rotating system comprises a static part. Moreover, the rotating system comprises a rotating part rotatable relative to the static part around an axis. Additionally, the rotating system comprises a measurement assembly according to the first aspect of the present disclosure. The first unit of the measurement assembly is mounted on the rotating part and the second unit of the measurement assembly is mounted on the static part. Due to the fact that the measurement assembly is simple and allows for a reliable and precise determination of a characteristic of the rotating part, such characteristics are available for the rotating system of the vehicle. Based thereon, an operation of the rotating system may be enhanced. Furthermore, these characteristics may be used when modifying or further developing such a rotating system.

In the context of the rotating system, the rotating part may comprise a shaft or may be a shaft.

In an example, the first unit and the second unit face each other along the axis or radially. Thus, in the first alternative, a principal direction of communication and a principal direction of power transfer is oriented axially, i.e. extends along the axis of rotation. In the second alternative, the principal direction of communication and the principal direction of power transfer is oriented radially, wherein the radial direction is based on the axis of rotation. In both examples, communication and power transfer may be done in a highly reliable manner.

In an example, a distance between the first unit and the second unit is 1 mm to 10 mm. It has been found that this range is particularly suitable, since it allows for reliable communication and power transfer. At the same time, it also allows to sufficiently separate the first unit and the second unit. This applies in a mechanical sense, but also in an electrical sense. Thus, undesired mechanical and/or electric interactions between the first unit and the second unit are avoided.

In an example, the rotating system is an electric machine. Alternatively, the rotating system is a brake system. Further alternatively, the rotating system is a mechanical transmission. In case the rotating system is an electric machine, the rotating part may comprise a rotor or may be the rotor of the electric machine. Optionally, the rotating mart may as well comprise a mechanical shaft. The static part may be the stator or may comprise the stator of the electric machine. In case the rotating system is a brake system, the rotating part may comprise a rotatable shaft or hub or brake disk configured to be connected to a wheel of the vehicle. The static part may be a carrier part, such as a chassis component, or a brake caliper. In case the rotating system is a mechanical transmission, the rotating part may comprise a rotatable shaft or gear. The static part may be a static component of the mechanical transmission, e.g. a housing part. In all of these alternatives, the at least one characteristic of the rotating part may be reliably and accurately determined. This characteristic may be used in the operation and/or for further development of the rotating system.

It is noted that the measurement assembly according to the first aspect of the present disclosure may be oil-resistant. This means that the measurement assembly is designed such that it may be operated in an environment that comprises oil. In particular, the operation of the measurement assembly is not affected if the measurement assembly or components thereof are in contact with oil. This further enhances the reliability and universality of the measurement assembly.

According to a third aspect, there is provided a vehicle. The vehicle comprises a rotating system of the second aspect of the present disclosure. Consequently, the vehicle also comprises a measurement assembly according to the first aspect of the present disclosure. Due to the fact that the measurement assembly is simple and allows for a reliable and precise determination of a characteristic of the rotating part, such characteristics are available for the rotating system of the vehicle and, thus, the vehicle. Based thereon, an operation of the rotating system and the vehicle may be enhanced. Furthermore, these characteristics may be used when modifying or further developing such a rotating system and the vehicle.

According to a fourth aspect, there is provided a method for operating a rotating system of the second aspect of the present disclosure. The method comprises transmitting measurement data from the first unit to the second unit, wherein the measurement data is digital. Consequently, high quality of data transmission can be ensured. In other words, the digital data communicated between the first unit and the second unit, is less prone to errors and disturbances than analog data would be. Altogether, the measurement assembly allows for a reliable and precise determination of a characteristic of the rotating part.

In an example, the measurement data is transmitted using first communication means or second communication means based on an operational parameter of the rotating system. Since different wireless communication means offer different combinations of advantages and disadvantages, such as different performances under different circumstances, having two different wireless communication means offers a choice to select one out of the two different wireless communication means based on the operational parameter of the rotating system. Consequently, depending on the operational parameter, the most appropriate communication means can be selected. Thus, reliable and efficient communication can be ensured.

In an example, the operational parameter is a rotational speed of the rotating part. Consequently, the first communication means or the second communication means can be selected based on the rotational speed of the rotating part. Thus, reliable communication may be established both when the rotating part turns comparatively fast and when the rotating part turns comparatively slowly. In an example, WiFi communication is used when the rotating part turns comparatively slowly and infrared communication is used when the rotating part turns comparatively fast.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a rotating system according to a first example of the present disclosure, wherein the rotating system comprises a measurement assembly according to a first example of the present disclosure,
- Figure 2: shows a view II-II of the rotating system of Figure 1,
- Figure 3: shows a view III-III of the rotating system of Figure 1,
- Figure 4: shows a rotating system according to a second example of the present disclosure, wherein the rotating system comprises a measurement assembly according to a second example of the present disclosure,
- Figure 5: shows a view V of the rotating system of Figure 4,
- Figure 6: schematically shows the components of the measurement assembly of Figures 1 and 4,
- Figure 7: shows a vehicle comprising a rotating system of Figure 1 or 4, and
- Figure 8: shows a test stand comprising a rotating system of Figure 1 or 4.

### DETAILED DESCRIPTION

The Figures are merely schematic representations and serve only to illustrate examples of the disclosure. Identical or equivalent elements are in principle provided with the same reference signs.

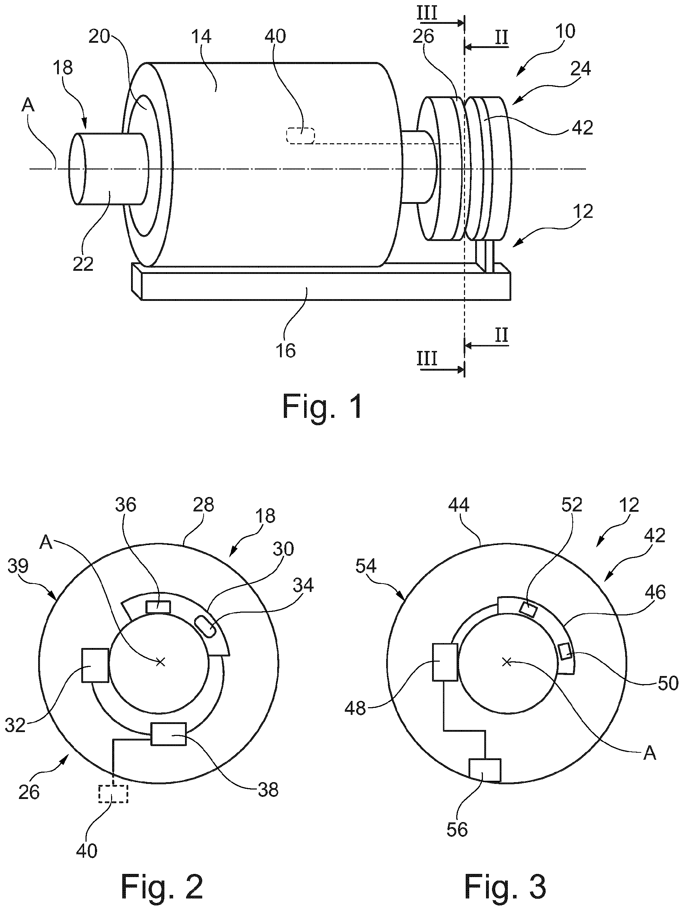

Figure 1 shows a rotating system 10 for a vehicle. Only the components of the rotating system 10 which are essential for the following explanations are shown.

In the example of Figure 1, the rotating system 10 is an electric machine configured for driving the vehicle. This means that the electric machine of Figure 1 may be designated as a traction machine.

The rotating system 10 comprises a static part 12 which, in the example of figure 1, comprises a stator 14 of the electric machine and a base element 16 on which the stator 14 is mounted.

Moreover, the rotating system 10 comprises a rotating part 18. The rotating part 18 is rotatable relative to the static part 12 around an axis A.

In the example of Figure 1, the rotating part 18 comprises a rotor 20 of the electric machine and a shaft 22 of the electric machine which is mechanically connected to the rotor 20.

The remaining components of the electric machine are not shown for the ease of representation.

The rotating system 10 further comprises a measurement assembly 24.

The measurement assembly 24 is configured for determining a characteristic of the rotating part 18. In the present example, this characteristic is a temperature. Thus, the measurement assembly 24 is configured for determining a temperature of the rotating part 18.

The measurement assembly comprises a first unit 26.

The first unit 26 comprises a ring-shaped carrier element 28 (see also Figure 2) which in the example of Figure 1 is formed by a ring-shaped printed circuit board.

Moreover, the first unit 26 comprises a first communication interface 30 and a first power transmission interface 32.

The first communication interface 30 comprises a first wireless communication means 34 and a second wireless communication means 36, wherein the first wireless communication means 34 and the second wireless communication means 36 are different.

In the present example, the first wireless communication means 34 comprises a WiFi antenna. This means that the first wireless communication means 34 is a WiFi transceiver.

Furthermore, in the present example, the second wireless communication means 36 comprises an infrared transceiver. Thus, using the second wireless communication means 36, infrared communication may be established.

The first power transmission interface 32 is configured to transmit power in an inductive manner. Thus, the first power transmission interface 32 comprises an induction coil.

Both the first communication interface 30, i.e. the first wireless communication means 34 and the second wireless communication means 36, and the first power transmission interface 32 are mounted on the carrier element 28 (cf. Figure 2).

It is noted that in Figure 2, the first power transmission interface 32, the first communication interface 30 comprising the first wireless communication means 34 and a second wireless communication means 36 are only represented schematically.

Additionally, the first unit 26 comprises an analog-digital converter 38 which is also mounted on the carrier element 28. Also the analog-digital converter 38 is only represented schematically.

The analog-digital converter 38 and the first communication interface 30 are communicatively coupled. Moreover, the analog-digital converter 38 and the first power transmission interface 32 are electrically coupled.

It is noted that the first unit 26 also comprises a data processing unit configured to control one or more of the analog-digital converter 38, the first communication interface 30 and the first power transmission interface 32. The data processing unit may be formed as a separate component of the first unit 26 which is communicatively coupled to the relevant ones of the analog-digital converter 38, the first communication interface 30 and the first power transmission interface 32. Alternatively, the data processing functionalities of the data processing unit may be incorporated in one or more of the analog-digital converter 38, the first communication interface 30 and the first power transmission interface 32. This means that the data processing functionalities may be distributed. For the ease of representation, a data processing unit is not shown in the Figures.

In order to enhance the functionality of the first power transmission interface 32, a layer 39 of ferromagnetic material is provided on the carrier 28.

The first unit 26 is mounted on the rotating part 18. In the example of Figure 1, this is done via a disk-shaped holder provided at the end of the shaft 22.

The measurement assembly 24 additionally comprises at least one sensor 40. Since in the present example, the measurement assembly 24 is configured to detect a temperature, the sensor is a temperature sensor. More specifically, in the present example, the temperature sensor is an electric resistance sensor, e.g. a PT 100 sensor.

The sensor 40 is arranged on the rotating part 18.

Moreover, the sensor 40 is coupled to the analog-digital converter, such that an analog measurement signal generated by the sensor 40 may be communicated to the analog-digital converter 38.

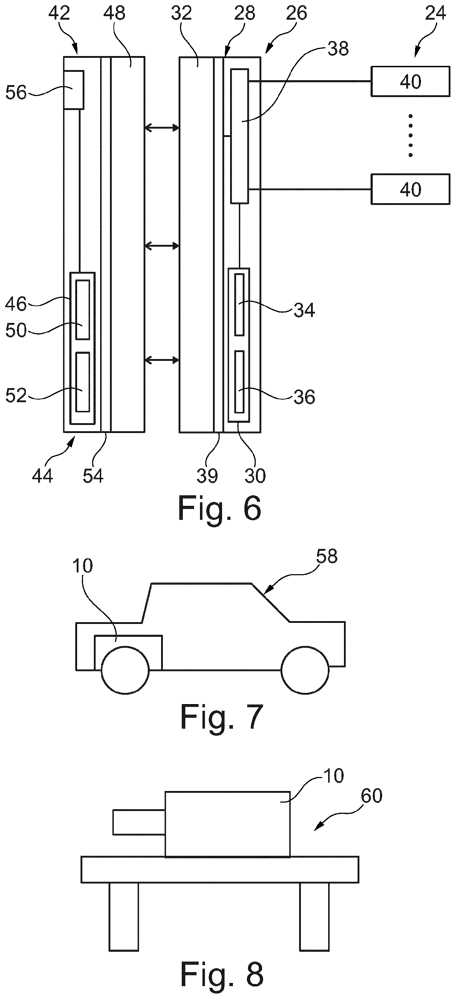

It is noted that for the ease of explanation, only one sensor 40 is mentioned in connection with the example of Figure 1. However, it is perfectly possible to use a plurality of sensors 40 which are for example distributed over the rotating part 18. The plurality of sensors may be connected to the same analog-digital converter 38. Alternatively, a plurality of analog-digital converters 38 may be provided and different sensors 40 may be connected to different analog-digital converters 38. A variant comprising more than one sensor 40 is illustrated in Figure 6 as will be further explained below.

The measurement assembly also comprises a second unit 42.

Also the second unit 42 comprises a ring-shaped carrier element 44 (see also Figure 3) which in the example of Figure 1 is formed by a ring-shaped printed circuit board.

Moreover, the second unit 42 comprises a second communication interface 46 and a second power transmission interface 48. Both the second communication interface 46 and the second power transmission interface 48 are provided on the ring-shaped carrier element 44.

The second communication interface 46 comprises a first wireless communication means 50 and a second wireless communication means 52, wherein the first wireless communication means 50 and the second wireless communication means 52 are different.

In the present example, the first wireless communication means 50 comprises a WiFi antenna. This means that the first wireless communication means 50 is a WiFi transceiver.

Furthermore, in the present example, the second wireless communication means 52 comprises an infrared transceiver. Thus, using the second wireless communication means 52, infrared communication may be established.

The second power transmission interface 48 is configured to transmit power in an inductive manner. Thus, the second power transmission interface 48 comprises an induction coil.

It is noted that in Figure 3, the second power transmission interface 48, and the second communication interface 46 comprising the first wireless communication means 50 and the second wireless communication means 52 are only represented schematically.

In order to enhance the functionality of the second power transmission interface 48, a layer 54 of ferromagnetic material is provided on the carrier 44.

Furthermore, the second unit 42 comprises a wire-bound communication interface 56 which in the present example is a CAN bus interface.

It is noted that the second unit 42 also comprises a data processing unit configured to control one or more of the second communication interface 46, the second power transmission interface 48, and the wire-bound communication interface 56. The data processing unit may be formed as a separate component of the second unit 42 which is communicatively coupled to the relevant ones of the second communication interface 46, the second power transmission interface 48, and the wire-bound communication interface 56. Alternatively, the data processing functionalities of the data processing unit may be incorporated in one or more of the second communication interface 46, the second power transmission interface 48, and the wire-bound communication interface 56. This means that the data processing functionalities may be distributed. For the ease of representation, a data processing unit is not shown in the Figures.

It is additionally noted, that the second unit 42 comprises a wire-bound power supply interface configured for powering the components of the second unit 42. Such a wire-bound power supply interface is not shown in the Figures.

The second unit 42 is mounted on the static part 12. In the example of Figure 1, this is done via a disk-shaped holder provided on the base element 16.

Thus, in the example of Figure 1, the first unit 26 and the second unit 42 are mounted such that they face each other along the axis A, i.e. along an axial direction. A distance between the first unit 26 and the second unit 42 is 1 mm to 10 mm.

Furthermore, the first power transmission interface 32 and the second power transmission interface 48 are inductively coupled. This means that the first power transmission interface 32 and the second power transmission interface 48 are wirelessly coupled. Consequently, power may be transmitted to the first unit 26. The transfer of power is independent from a movement, more precisely a rotation, of the rotating part 18. This means that power can be transmitted independent from the fact whether the rotating part 18 is rotating or not.

Moreover, the first communication interface 30 and the second communication interface 46 are wirelessly coupled. More precisely, the first wireless communication means 34 of the first communication interface 30 is wirelessly communicatively coupled to the first wireless communication means 50 of the second communication interface 46.

Additionally, the second wireless communication means 36 of the first communication interface 30 is wirelessly communicatively coupled to the second wireless communication means 52 of the second communication interface 46.

Thus, the rotating system 10 including the measurement assembly 24 may be operated as follows.

An analog signal is generated by the sensor 40. In the example of Figure 1, this measurement signal is indicative of a temperature of the rotating part 18.

The measurement signal is transmitted to the analog-digital converter 38, wherein the measurement signal is converted into a digital signal indicative of the temperature of the rotating part, which is also designated as measurement data.

Subsequently, the digital measurement data indicative of the temperature of the rotating part 18 may be transmitted to the second unit 42 using the first communication interface 30 and the second communication interface 46. As has been mentioned before, both the first communication interface 30 and the second communication interface 46 comprises two wireless communication means 34, 36, 50, 52.

The first wireless communication means 34, 50 and the second communication means 36, 52 are redundant. This means that, in principle, the digital measurement data may be transmitted using the first wireless communication means 34, 50 or, alternatively, the second communication means 36, 52.

However, based on an operational parameter of the rotating system 10, the first wireless communication means 34, 50 or the second communication means 36, 52 may be more suitable to transfer the measurement data.

In the example of Figure 1, the operational parameter of the rotating system 10 is a rotational speed of the rotating part 18.

Thus, if the rotational speed of the rotating part 18 is lower than a predefined rotational speed threshold, the first wireless communication means 34, 50 are used. Otherwise, i.e. if the rotational speed of the rotating part 18 equals or exceeds the predefined rotational speed threshold, the second communication means 36, 52 is used. As has been mentioned before, in the present example, the first communication means 34, 50 are configured to provide WiFi communication, wherein the second communication means 36, 52 are configured to provide infrared communication.

Once the digital measurement data has been received at the second unit 42, the measurement data may be further transmitted to a data processing device which may be communicatively connected to the second unit 42 via the wire-bound communication interface 56.

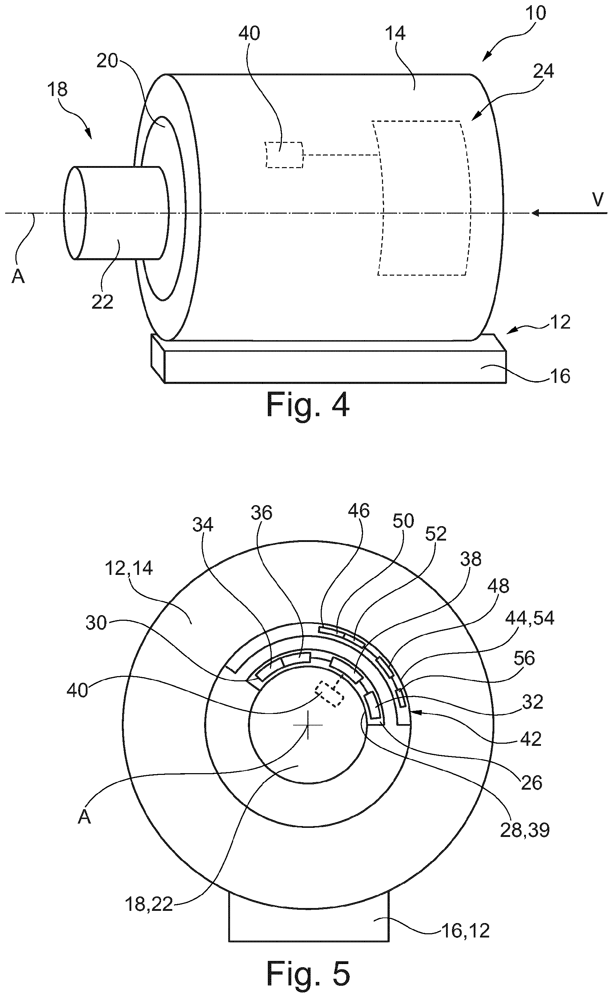

Figures 4 and 5 show a rotating system according to a second example which comprises a measurement assembly 24 according to a second example. In the following, only the differences over the first example as explained in connection with Figures 1 to 3 will be explained. Otherwise, the above explanations apply mutatis mutandis.

The first difference relates to the fact that in the second example, the carrier element 28 of the first unit and the carrier element 44 of the second unit are curved. More precisely, the carrier element 28 and the carrier element 44 both are sheet shaped, wherein the sheet are bent.

As before, both the carrier element 28 and the carrier element 44 comprise a printed circuit board, which in the second example offers sufficient flexibility to be bent.

Consequently, the carrier element 28 of the first unit 26 is mounted on a lateral surface of a circular cylindrical element of the rotating part 18. In the example of Figures 4 and 5, the carrier element 28 of the first unit 26 is mounted on a lateral surface of a portion of the shaft 22.

Also the carrier element 44 of the second unit 42 is mounted on a lateral surface of a circular cylindrical element. However, this circular cylindrical element now is an element of the static part 12. In the example of Figures 4 and 5, the carrier element 44 of the second unit 42 is mounted on an interior lateral surface of a portion of the stator 14.

Moreover, in the second example, the first unit 26 and the second unit 42 are arranged such that they face each other in a radial direction. This radial direction is determined based on the direction of the axis A of rotation.

It is noted that even though in the above examples, the first communication interface and the first power transmission interface have been presented as separate entities, it is alternatively possible to form the first communication interface and the first power transmission interface integrally. In such an alternative, the induction coil of the first power transmission interface additionally functions as an antenna of the first communication interface. In the same manner, even though the second communication interface and the second power transmission interface have been presented as separate entities, it is alternatively possible to form the second communication interface and the second power transmission interface integrally. In such an alternative, the induction coil of the second power transmission interface additionally functions as an antenna of the second communication interface.

In Figure 6, the components of the measurement system 24 are represented in the form of a block diagram. Consequently, the representation of Figure 6 covers both the first example and the second example. Moreover, the use of more than one sensor 40 is illustrated in Figure 6.

Even though in Figure 6, the plurality of sensors 40 is coupled to one analog-digital converter 38, it is alternatively also possible that the first unit 26 comprises two or more analog-digital converters 38. In such a case, one or more sensors may be connected to each of the two or more analog-digital converters 38.

Both the rotating system according to the first example and the rotating system 10 according to the second example may be used in a vehicle 58. This is pictured in Figure 7.

As in the examples of Figures 1 to 5, the rotating system 10 may be an electric machine. In the example in which the rotating system 10 is used in a vehicle 58, this electric machine may be an electric traction machine of the vehicle 58. The measurement data provided by the measurement assembly 24 may, thus, be used during operation of the vehicle 58 or may be collected for research and development purposes.

Alternatively, the rotating system 10 according to the first example and the rotating system 10 according to the second example may be used in a test stand 60. It is depicted in Figure 8.

As in the examples of Figures 1 to 5, the rotating system 10 may be an electric machine. In the example in which the rotating system 10 is used in a test stand 60. The measurement data provided by the measurement assembly 24 may, thus, be used for research and development purposes.

It is noted that, even though in the preceding examples, the sensor 40 is a temperature sensor, it is alternatively possible that the sensor 40 is configured to detect a different characteristic of the rotating part 18 than a temperature. In a first alternative, the sensor 40 may comprise a strain sensor, such that mechanical strains occurring in the rotating part 18 may be detected. It is noted that a strain in a rotating part 18 may be indicative of a torque. This may be useful if the rotating part 18 is a mechanical shaft or comprises a mechanical shaft. Alternatively, the sensor 14 may be configured and used in order to detect electrical resistance and/or electrical voltage.

It is further noted, that even though the above-described examples relate to a rotating system 10 which is an electric machine, it is also possible that, in another example, the rotating system is a brake system or a mechanical transmission.

In case the rotating system 10 is a brake system, the rotating part 18 may comprise a rotatable shaft or hub or brake disk configured to be connected to a wheel of the vehicle. The static part 12 may be a carrier part, such as a chassis component, or a brake caliper.

In case the rotating system 10 is a mechanical transmission, the rotating part 18 may comprise a rotatable shaft or gear. The static part 12 may be a static component of the mechanical transmission, e.g. a housing part.

Beyond that, the above explanations apply mutatis mutandis the examples in which the rotating system 10 is a brake system or a mechanical transmission.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: rotating system
- 12: static part
- 14: stator
- 16: base element
- 18: rotating part
- 20: rotor
- 22: shaft
- 24: measurement assembly
- 26: first unit
- 28: carrier element of the first unit
- 30: first communication interface
- 32: first power transmission interface
- 34: first wireless communication means of the first communication interface
- 36: second wireless communication means of the first communication interface
- 38: analog-digital converter
- 39: layer of ferromagnetic material
- 40: sensor
- 42: second unit
- 44: carrier element of the second unit
- 46: second communication interface
- 48: second power transmission interface
- 50: first wireless communication means of the second communication interface
- 52: second wireless communication means of the second communication interface
- 54: layer of ferromagnetic material
- 56: wire-bound communication interface
- 58: vehicle
- 60: test stand
- A: axis of rotation

## Claims

1. A measurement assembly (24) for determining a characteristic of a rotating part (18) of a rotating system (10) for a vehicle (58), the measurement assembly (24) comprising:
- a first unit (26) mountable on a rotating part (18) of the rotating system (10), and comprising an analog-digital converter (38), a first communication interface (30), and a first power transmission interface (32), wherein the analog-digital converter (38) and the first communication interface (30) are communicatively coupled, and wherein the analog-digital converter (38) and the first power transmission interface (32) are electrically coupled,
- at least one sensor (40) electrically coupled to the analog-digital converter (38), and
- a second unit (42) mountable on a static part (12) of the rotating system (10), comprising a second communication interface (46), and a second power transmission interface (48),
wherein the first communication interface (30) and the second communication interface (46) are wirelessly coupled, and wherein the first power transmission interface (32) and the second power transmission interface (48) are wirelessly coupled.

2. The measurement assembly (24) of claim 1, wherein the first communication interface (30) comprises a first wireless communication means (34) and a second wireless communication means (36),
wherein the second communication interface (46) comprises a first wireless communication means (50) and a second wireless communication means (52),
wherein the first wireless communication means (34) of the first communication interface (30) is communicatively coupled or couplable to the first wireless communication means (50) of the second communication interface (46), and wherein the second wireless communication means (36) of the first communication interface (30) is communicatively coupled or couplable to the second wireless communication means (52) of the second communication interface (46), and
wherein the first wireless communication means (34, 50) and the second wireless communication means (36, 52) are different.

3. The measurement assembly (24) of any one of the preceding claims, wherein the first communication interface (30) and the first power transmission interface (32) are formed integrally and/or wherein the second communication interface (46) and the second power transmission interface (48) are formed integrally.

4. The measurement assembly (24) of any one of the preceding claims, wherein the measurement assembly (24) comprises at least two sensors (40) connected to the same analog-digital converter (38) or to different analog-digital converters (38).

5. The measurement assembly (24) of any one of the preceding claims, wherein the first unit (26) comprises a ring-shaped or curved carrier element (28) and/or wherein the second unit (42) comprises a ring-shaped or curved carrier element (44).

6. The measurement assembly (24) of claim 5, wherein the carrier element (28) of the first unit (26) and/or the carrier element (44) of the second unit (42) comprises a ferromagnetic material (39, 54).

7. The measurement assembly (24) of any one of the preceding claims, wherein the first power transmission interface (32) and the second power transmission interface (48) are inductively coupled.

8. The measurement assembly (24) of any one of the preceding claims, wherein the at least one sensor (40) comprises one or more of a temperature sensor, a strain sensor, an electric resistance sensor and a voltage sensor.

9. A rotating system (10) for a vehicle (58), the rotating system (10) comprising:
- a static part (12),
- a rotating part (18) rotatable relative to the static part (12) around an axis (A),
- a measurement assembly (24) according to any one of the preceding claims,
wherein the first unit (26) of the measurement assembly (24) is mounted on the rotating part (18) and wherein the second unit (42) of the measurement assembly (24) is mounted on the static part (12).

10. The rotating system (10) of claim 9, wherein the first unit (26) and the second unit (42) face each other along the axis (A) or radially.

11. The rotating system (10) of claim 9 or 10, wherein a distance between the first unit (26) and the second (42) unit is 1 mm to 10 mm.

12. The rotating system (10) of any one of claims 9 to 11, wherein the rotating system (10) is an electric machine or wherein the rotating system is a brake system or wherein the rotating system is a mechanical transmission.

13. A vehicle (58) comprising a rotating system (10) of any one of claims 9 to 12.

14. A method for operating a rotating system (10) of any one of claims 9 to 12, the method comprising:
transmitting measurement data from the first unit (26) to the second unit (42), wherein the measurement data is digital.

15. The method of claim 14, wherein the measurement data is transmitted using first communication means (34, 50) or second communication means (36, 52) based on an operational parameter of the rotating system (10).

## Amended claims

### Amended claims in accordance with Rule 137(2) EPC.

1. A measurement assembly (24) for determining a characteristic of a rotating part (18) of a rotating system (10) for a vehicle (58), the measurement assembly (24) comprising:
- a first unit (26) mountable on a rotating part (18) of the rotating system (10), and comprising an analog-digital converter (38), a first communication interface (30), and a first power transmission interface (32), wherein the analog-digital converter (38) and the first communication interface (30) are communicatively coupled, and wherein the analog-digital converter (38) and the first power transmission interface (32) are electrically coupled,
- at least one sensor (40) electrically coupled to the analog-digital converter (38), and
- a second unit (42) mountable on a static part (12) of the rotating system (10), comprising a second communication interface (46), and a second power transmission interface (48),
wherein the first communication interface (30) and the second communication interface (46) are wirelessly coupled, wherein the first power transmission interface (32) and the second power transmission interface (48) are wirelessly coupled,
**characterised in that** the first communication interface (30) comprises a first wireless communication means (34) and a second wireless communication means (36), and the second communication interface (46) comprises a first wireless communication means (50) and a second wireless communication means (52),
wherein the first wireless communication means (34) of the first communication interface (30) is communicatively coupled or couplable to the first wireless communication means (50) of the second communication interface (46), and wherein the second wireless communication means (36) of the first communication interface (30) is communicatively coupled or couplable to the second wireless communication means (52) of the second communication interface (46), and
wherein the first wireless communication means (34, 50) and the second wireless communication means (36, 52) are different.

2. The measurement assembly (24) of claim 1, wherein the first communication interface (30) and the first power transmission interface (32) are formed integrally and/or wherein the second communication interface (46) and the second power transmission interface (48) are formed integrally.

3. The measurement assembly (24) of any one of the preceding claims, wherein the measurement assembly (24) comprises at least two sensors (40) connected to the same analog-digital converter (38) or to different analog-digital converters (38).

4. The measurement assembly (24) of any one of the preceding claims, wherein the first unit (26) comprises a ring-shaped or curved carrier element (28) and/or wherein the second unit (42) comprises a ring-shaped or curved carrier element (44).

5. The measurement assembly (24) of claim 4, wherein the carrier element (28) of the first unit (26) and/or the carrier element (44) of the second unit (42) comprises a ferromagnetic material (39, 54).

6. The measurement assembly (24) of any one of the preceding claims, wherein the first power transmission interface (32) and the second power transmission interface (48) are inductively coupled.

7. The measurement assembly (24) of any one of the preceding claims, wherein the at least one sensor (40) comprises one or more of a temperature sensor, a strain sensor, an electric resistance sensor and a voltage sensor.

8. A rotating system (10) for a vehicle (58), the rotating system (10) comprising:
- a static part (12),
- a rotating part (18) rotatable relative to the static part (12) around an axis (A),
- a measurement assembly (24) according to any one of the preceding claims, wherein the first unit (26) of the measurement assembly (24) is mounted on the rotating part (18) and wherein the second unit (42) of the measurement assembly (24) is mounted on the static part (12).

9. The rotating system (10) of claim 8, wherein the first unit (26) and the second unit (42) face each other along the axis (A) or radially.

10. The rotating system (10) of claim 8 or 9, wherein a distance between the first unit (26) and the second (42) unit is 1 mm to 10 mm.

11. The rotating system (10) of any one of claims 8 to 10, wherein the rotating system (10) is an electric machine or wherein the rotating system is a brake system or wherein the rotating system is a mechanical transmission.

12. A vehicle (58) comprising a rotating system (10) of any one of claims 8 to 11.

13. A method for operating a rotating system (10) of any one of claims 8 to 11, the method comprising:
transmitting measurement data from the first unit (26) to the second unit (42), wherein the measurement data is digital.

14. The method of claim 13, wherein the measurement data is transmitted using first communication means (34, 50) or second communication means (36, 52) based on an operational parameter of the rotating system (10).
